(19) **Europäisches Patentamt**
**European Patent Office**
**Office européen des brevets**

(11) **EP 1 452 830 B1**

(12) **FASCICULE DE BREVET EUROPEEN**

(45) Date de publication et mention
de la délivrance du brevet:
**18.08.2010 Bulletin 2010/33**

(51) Int Cl.:
*G01C 19/04* (2006.01)    *F03G 3/08* (2006.01)

(21) Numéro de dépôt: **02779585.5**

(22) Date de dépôt: **11.10.2002**

(86) Numéro de dépôt international:
**PCT/ES2002/000482**

(87) Numéro de publication internationale:
**WO 2003/042632 (22.05.2003 Gazette 2003/21)**

(54) **VERIN GYROSCOPIQUE**

GYROSKOPISCHES STELLGLIED

GYROSCOPIC ACTUATOR

(84) Etats contractants désignés:
**AT BE BG CH CY CZ DE DK EE ES FI FR GB GR
IE IT LI LU MC NL PT SE SK TR**

(30) Priorité: **17.10.2001 ES 200102290**

(43) Date de publication de la demande:
**01.09.2004 Bulletin 2004/36**

(73) Titulaire: **Business Everywhere SL
20305 Irún (Guipúzcua) (ES)**

(72) Inventeur: **GUERRERO PADRON, Juan, Jose
E-28009 Madrid (ES)**

(74) Mandataire: **Carvajal y Urquijo, Isabel et al
Clarke, Modet & C.
C/ Goya, 11
28001 Madrid (ES)**

(56) Documents cités:
**DE-A- 3 523 160       DE-A- 4 017 474
DE-A- 4 020 888       DE-A- 4 243 273
GB-A- 2 213 587       GB-A- 2 225 424
US-A- 2 158 180       US-A- 3 691 853
US-A- 3 741 500       US-A- 4 361 055
US-A- 2002 145 077**

## Description

L'actionneur gyroscopique est un dispositif qui permet d'orienter la plateforme sur laquelle il est installé, en appliquant pour cela la loi de conservation du moment cinétique. Cette orientation est obtenue sans recourir aux propriétés physiques de l'environnement (eau ou air). Aussi la plateforme n'aura-t-elle pas besoin de disposer de surfaces ce contrôle (aérodynamiques ou hydrodynamiques).

Ses applications prévues sont:

• Aéronautiques- pour des aéronefs à aile fixe, car il peut remplacer les surfaces de contrôle aérodynamiques des aéronefs (ailerons, gouvernails, etc.) en réalisant les rotations en tangage, roulis ou embardée avec l'actionneur gyroscopique.

• pour des hélicoptères, grâce au remplacement du rotor de queue qui génère le couple de compensation du couple de réaction dû au rotor principal. L'actionneur se charge de produire ce couple de compensation et permet la conduite de l'hélicoptère en embardée.

• Navales, car il permet le remplacement des gouvernails des bateaux et des embarcations, et d'effectuer des manoeuvres avec l'actionneur gyroscopique.

• Stabilisation de véhicules terrestres (automobiles, camions, autocars et trains), car il peut produire des couples s'opposant aux couples de capotage dans les changements de direction lorsque le véhicule est en marche.

## SECTEUR DE LA TECHNIQUE

L'invention, quant à ses applications, est liée aux secteurs aéronautique, naval et automobile. Elle utilise les branches suivantes de l'ingénierie: mécanique, électrotechnique et électronique.

## ETAT DE LA TECHNIQUE ET JUSTIFICATION DE LA NÉCESSITÉ

C'est dans le secteur aérospatial que s'est développé ce type de dispositifs. Il y a de nombreux brevets, surtout nord-américains, qui font apparaître l'état de la technique dans ce secteur. À titre d'exemple, mentionnons les suivants: US006135392A, US005826829A et US005931421A, qui, en outre, font allusion à d'autres brevets.

L'utilité que confère aux satellites ce type de dispositifs est celle du contrôle d'attitude de la plateforme pour obtenir une orientation appropriée des équipements de bord. Les dispositifs gyroscopiques utilisés sont connus sous le nom d'assemblages de roues à inertie ; plus concrètement *reaction wheel assemblies* (RWA) ou également *momentum wheel assemblies* (MWA). Il consistent en un assemblage de 3 roues ou disques, disposées orthogonalement selon les axes tridimensionnels de référence du satellite qui, en tournant en spin, génèrent un couple, chacune sur son axe. Pour produire un couple déterminé changeant l'orientation du satellite, les roues tournent de façon à ce que le couple résultant produit par la composition orthogonale des trois générés soit approprié pour déplacer la structure selon les exigences.

La façon de produire un couple plus ou moins grand sur un axe déterminé du système de référence consiste à accélérer ou à décélérer la rotation en spin du RWA ou du MWA correspondant. Avec ce dispositif, on arrive à générer des couples maximums de 1.6 Newton - mètre (N•m).

Il existe des dispositifs RWA/MWA présentés par Honeywell, tels que les modèles HR12, HR14, HR16, HM 4520 et HR2010/HR4510, dont les caractéristiques de base sont des vitesses de rotation en spin autour de 5000 tr/mn., un poids entre 9 et 11 kg, des diamètres maximums allant de 300 à 400 mm et des couples résultants de 0.1 à 0.2 N•m.

Étant donné les valeurs aussi faibles dans le couple résultant, d'autres dispositifs ont été mis au point pour l'augmenter légèrement. C'est le cas de ce qu'on appelle *momentum wheel platform* (MWP) décrit dans le brevet US005112012, basé sur trois unités RWA/MWA montés sur une plaque triangulaire plate, qui contient, à ses angles, une série de vis mues par des moteurs pas à pas, de sorte à pouvoir contrôler l'orientation de la plaque au moyen du mouvement des vis qui, en tournant, l'inclinent, ce qui produit un accroissement du moment résultant. Cependant l'augmentation obtenue est encore très faible, car on n'obtient pas de mouvements rapides à la suite de la rotation des vis.

Ultérieurement, un nouveau dispositif appelé *control moment gyroscope* (CMG) a été développé, également commercialisé par Honeywell, consistant en une enveloppe sphérique qui tourne à 6000 tr/mn montée sur un assemblage multiaxial de suspension à la Cardan. Il permet un couple maximum de 305 N•m ; néanmoins, ses dimensions sont importantes : un diamètre d'un mètre et un poids de 53 kg.

Les dispositifs générateurs de couple dans l'espace, du fait des valeurs si limitées qu'ils donnent et le coût élevé qu'ils ont, sont pratiquement non-viables pour des opérations sur terre, où les couples exigés peuvent être, en fonction des applications, très élevés.

L'actionneur gyroscopique est conçu comme un dispositif aux dimensions appropriées à l'application pour laquelle il va être demandé et capable de générer le rang de couples que demande cette application. Il permet ces capacités car il conjugue les mouvements de spin et de nutation avec une géométrie particulière ; au lieu de roues à inertie, il utilise des anneaux, ce qui lui confère de grosses possibilités, comme on le verra dans cet exposé. À titre d'exemple, avec des matériaux simples (acier au carbone), une vitesse en spin de 3000 tr/mn, un diamètre maximum de 300 mm, une hauteur de 350 mm, et un poids total de 10 kg., il arrive à générer des couples supérieurs à 650 N•m, pendant un temps indéfini. Bien évidemment, avec d'autres dimensions, on peut obtenir des couples résultants bien supérieurs.

La philosophie de la conception de l'actionneur gyroscopique est fondée sur le fait que les limitations du couple fourni sont établies par la rigidité du matériau qui constitue les anneaux du mécanisme et de l'électronique associée au moteur qui actionne le mouvement en nutation.

Étant donné la possibilité qu'a l'actionneur gyroscopique de générer un couple mécanique sur la plateforme où il est situé et, en conséquence, de varier l'orientation de celle-ci, ses applications possibles sont très larges, comme on l'a vu. La nécessité pour chacune des applications indiquées est justifiée ci-dessous.

- Aéronautique. La gouverne des aéronefs à aile fixe en cas de tangage, de roulis et d'embardée se fait grâce aux surfaces aérodynamiques de contrôle qui sont installées sur les ailes, les stabilisateurs et le gouvernail de queue. Quoiqu'il existe de nombreuses variantes quant à la configuration de base, cette modalité de gouverne est basée sur la résistance aérodynamique que produisent de telles surfaces, au moment de faire varier leur disposition initiale afin d'effectuer la manoeuvre demandée. Au moyen de la résistance aérodynamique qu'elles produisent, il apparaît des forces et des moments résultants sur l'ensemble structural de l'aéronef, ce qui permet ainsi de réaliser la manoeuvre recherchée.

L'actionneur gyroscopique produit une série de couples sur l'ensemble structural de l'aéronef, de sorte que ce dernier soit obligé de changer son orientation sur les trois axes du système de référence liée à celui-ci, produisant ainsi les rotations en tangage, roulis et embardée qui permettent la manoeuvre demandée.

Le besoin est évident, car l'actionneur gyroscopique présente les avantages suivants par rapport au procédé conventionnel (surfaces aérodynamiques):

➢ Il n'y a pas de résistances aérodynamiques associées à son propre fonctionnement s'accompagnant d'une consommation énergétique ajoutée.
➢ On réussit à éliminer tous les mécanismes associés aux surfaces de contrôle actuelles, ainsi qu'à simplifier l'architecture extérieure de l'aéronef (ailes et stabilisateurs). Ceci aura pour conséquence une plus grande capacité de charge utile.

En ce qui concerne l'état de la technique, il faut indiquer que certains types d'aéronefs à aile fixe, plus concrètement certains modèles d'avions de combat, peuvent renforcer les manoeuvres des surfaces de contrôle grâce à la variation du vecteur de poussée qui a lieu dans les tuyères des moteurs. Ceci est obtenu grâce à une déviation des gaz de sortie dans la tuyère elle-même qui est conçue pour varier sa géométrie de façon appropriée.

- Hélicoptères. Comme on le sait, l'hélicoptère est un type d'aéronef à aile pivotante qui a une hélice principale actionnée par un moteur, avec laquelle il peut se soutenir dans l'air et, en même temps, se déplacer. Le couple qui fait fonctionner l'hélice principale crée un autre couple de signe opposé qui ferait tourner la cellule de vol dans le sens contraire, si ce n'était du fait de plusieurs solutions qui ont été trouvées jusqu'à présent. Parmi les plus importantes, figurent les suivantes (Modern Fighting Helicopters, Bill Gunston and Mike Spick, 1998 Greenwich Editions):

➢ Hélice compensatrice de queue (Penny - farthing). Un exemple de cette configuration est le Lynx. C'est la plus commune. Le couple compensateur est généré par une hélice à la queue du fuselage, qui permet également de contrôler l'orientation en embardée de l'aéronef.
➢ Rotors en tandem (Twin tandem). Exemple: le Chinook. Cette configuration possède deux rotors principaux, qui sont dans le même plan et se déplaçant en tournant en sens contraire, ce qui permet ainsi de compenser leurs couples respectifs.
➢ Rotors d'un côté à l'autre (Twin side). Exemple: le V-12. Les deux rotors sont situés des deux côtés du fuselage et tournent en sens contraire à des régimes tels que les couples sont compensés.
➢ Rotors d'un côté à l'autre entrecroisés (Twin intermeshing). Exemple: HH-43. C'est une variante du précédent dans laquelle les rotors s'approchent jusqu'à ce que les pales s'entrecroisent, ce qui permet ainsi une configuration plus compacte.
➢ Rotors coaxiaux (Twin coaxial). Exemple: Ka-25. Les axes des deux rotors sont coaxiaux et produisent des couples identiques et de signe contraire.

Dans la configuration la plus commune (la première), des essais ont été faits pour supprimer le rotor de queue, grâce à l'éjection des gaz chauds du moteur (normalement, il est du type turbine) à travers la queue du fuselage. Un exemple en est le NOTAR de McDonnell Douglas. Bien que le principal inconvénient de ce type de configurations en soit la dépense excessive de combustible, il existe plusieurs modèles mis au point, étant tous fondés sur cette technologie.

L'actionneur gyroscopique, convenablement installé à l'intérieur du fuselage de l'hélicoptère, permettra à celui-ci d'avoir un seul rotor, le rotor principal, de sorte que le couple généré soit compensé par l'actionneur, ce qui permet également l'orientation en embardée.

Les avantages par rapport aux procédés conventionnels découlent de l'élimination de la queue du fuselage ainsi que du rotor secondaire. Ceux-ci sont les suivants:

➢ Simplification mécanique de l'aéronef du fait de l'élimination du rotor secondaire.

➢ Diminution du poids total. Même s'il faut installer un nouveau dispositif (l'actionneur gyroscopique), on arrive à supprimer une partie importante du fuselage et des mécanismes associés au rotor secondaire, de manière à ce que la masse totale résultante soit inférieure à l'originale.

➢ Amélioration des formes aérodynamiques. En éliminant le rotor secondaire et sa structure portante, on réussit à obtenir une forme aérodynamique extérieure ayant une plus grande continuité, semblable à un ellipsoïde de révolution, qui donne de plus grandes prestations à l'aéronef.

➢ Plus grande capacité de charge. Avec la nouvelle forme, l'hélicoptère est capable de transporter un plus gros volume et plus de charge.

• Navals. Sur n'importe quel type de bateau ou embarcation, on utilise le gouvernail pour effectuer la manoeuvre qui produit, en définitive, de la même façon que ce qui arrive avec les aéronefs, un moment résultant sur la structure, en permettant de l'orienter dans la direction voulue.

Le gouvernail engendre une résistance hydrodynamique associée à sa propre action, d'autant plus grande que la surface équivalente de celui-ci affrontant les lignes de courant de l'eau est grande.

L'actionneur gyroscopique à bord d'une embarcation, dimensionné dans ce but et convenablement installé, y génère le couple approprié, capable de varier l'orientation de l'ensemble tout entier, de façon à pouvoir effectuer les manoeuvres voulues en évitant l'utilisation du ou des gouvernails.

L'avantage de ce dispositif repose essentiellement sur la capacité que confère l'actionneur à l'embarcation pour pouvoir manoeuvrer sans résistances ajoutées du fait de l'augmentation de surface équivalente face aux lignes de courant de l'eau.

Une autre application qu'a l'actionneur gyroscopique sur les plateformes navales est la capacité de les stabiliser, voir de leur conférer l'attitude appropriée dans le tangage, le roulis et l'embardée, pour générer de façon stable toutes sortes de manoeuvres. Ceci est particulièrement utile sur les embarcations sportives à moteur ou à voile. À ce sujet, citons les brevets suivants: US004863404, US004817550

• Véhicules terrestres. L'application la plus immédiate prévue dans ce domaine est la stabilisation des véhicules quand ils se déplacent. Dans le cas des automobiles (autocars et camions aussi), il y a actuellement deux types de dispositifs qui confèrent une stabilité au véhicule, lorsqu'il faut faire face à un changement de direction suffisamment accusé pour provoquer un couple de retournement considérable sur l'ensemble structural. De tels dispositifs sont les barres stabilisatrices et les systèmes d'amortissement actif. Dans les deux cas, on recherche un accroissement de la rigidité de la suspension du véhicule du côté du véhicule où se produit le pivotement par retournement et une diminution sur le côté opposé, de sorte que le véhicule ait tendance à basculer dans le sens contraire à celui du retournement et qu'ainsi l'instabilité soit compensée par la propre masse déplacée. À titre de référence, énumérons les brevets suivants: US005876148, US004930807, US004550926, US005876148, US004345661, GB2039834A, DE4116837, JP57182505.

L'ensemble constitué par l'actionneur gyroscopique avec une plateforme gyrostabilisée et un processeur, est capable de générer le couple contraire à celui de retournement du véhicule, en le stabilisant au moment de prendre le virage qui produit l'instabilité. Le mode de fonctionnement de l'ensemble est le suivant: la plateforme gyrostabilisée détecte la déviation produite lors du tangage, roulis et embardée de la part du véhicule, par rapport à sa position de repos (véhicule à l'arrêt ou en mouvement sans stabilité). Les mesures prises sont transmises au processeur qui donne les ordres adéquats à l'actionneur afin de générer les couples qui atténuent les instabilités de la structure du véhicule.

Le principal avantage du système basé sur l'actionneur face aux autres cités, est la grande marge d'action dont il dispose, car, dans le second cas, le couple équivalent créé qui s'oppose au couple de retournement va dépendre de marges très étroites du fait de sa propre nature; cependant, en utilisant le système fondé sur l'actionneur gyroscopique, les possibilités de générer un couple dépendra de la conception du dispositif lui-même, et non pas de l'ensemble structural, et elles peuvent être très élevées, comme on le constatera ci-dessous, lorsqu'on fera la description du mécanisme.

Dans le cas du transport ferroviaire, l'actionneur a une application similaire à celle décrite pour les véhicules automobiles, car l'un des facteurs limitants de la vitesse plus grande des trains est le rayon de courbure horizontale du tracé des voies, car lorsqu'un train prend un virage, il y a une accélération centrifuge sur les voyageurs, dont la valeur maximale est limitée par les normes en vigueur dans chaque pays. Pour diminuer cettte valeur, il y a deux types de solutions: la première a été développée par l'entreprise PATENTES TALGO et consiste en une structure des wagons constituée par un portique d'où pend la structure de l'habitacle, de manière à ce que l'habitacle, au moment de prendre le virage, bascule en s'inclinant et l'accélération centrifuge subie par les occupants se dédouble en une normale vers la base de l'habitacle et une autre perpendiculaire à celle-ci qui est celle que pénalisent les normes, mais qui est diminuée par rapport à celle qu'il y aurait eue, si l'habitacle était resté parfaitement horizontal (effet pendulaire).

Le deuxième type de solution consiste en un amortissement actif, similaire à celui mentionné pour les véhicules automobiles, qui donne lieu aux inclinaisons appropriées des habitacles des wagons.

Citons les numéros suivants de brevets en rapport avec ce qui précède: FR2563487, FR2563487-A1, US5573265.

L'actionneur gyroscopique faisant partie d'un ensemble comme celui décrit auparavant (avec plateforme stabilisatrice et processeur) peut non seulement produire l'inclinaison voulue de l'habitacle des wagons, mais aussi contribuer à la stabilité complète de la structure en générant le couple anti-retournement correspondant.

L'avantage essentiel pour le transport ferroviaire consiste dans la possibilité de pouvoir circuler à de plus grandes vitesses que les vitesses actuelles, dans des conditions de sécurité et de confort plus grandes, si possible.

**DESCRIPTION DES FIGURES**

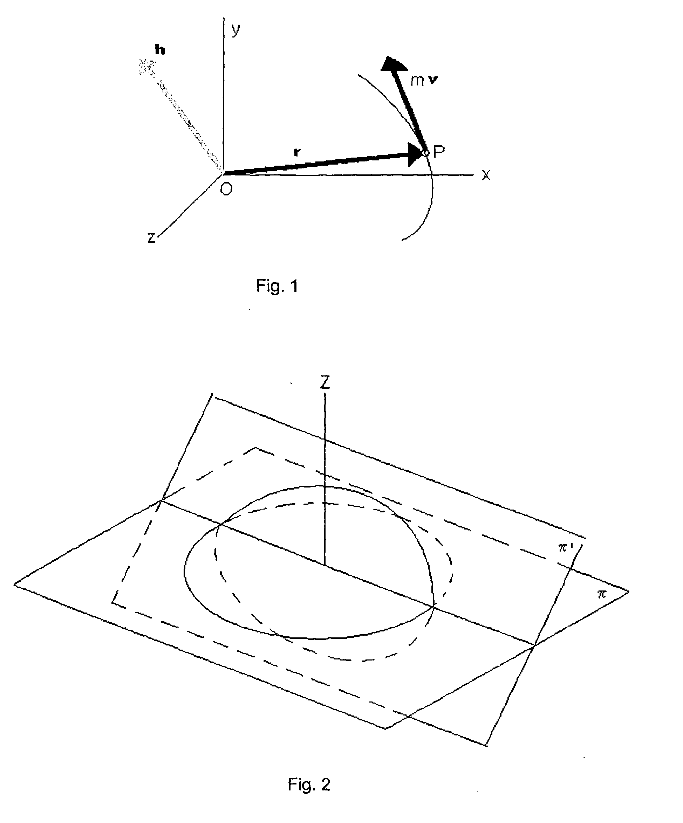

La figure 1 représente une particule de masse *m* dans l'espace suivant une trajectoire avec une vitesse *v*, dans un système de référence *Oxyz* dans lequel elle a un vecteur de position *r* et un moment cinétique *h*. Elle sert à illustrer la loi physique sur laquelle est fondée l'invention.

La figure 2 présente un anneau sur un plan π et également le même anneau sur un autre plan π', qui a tourné par rapport au premier. L'axe de rotation passe par une ligne diamétrale de l'anneau.

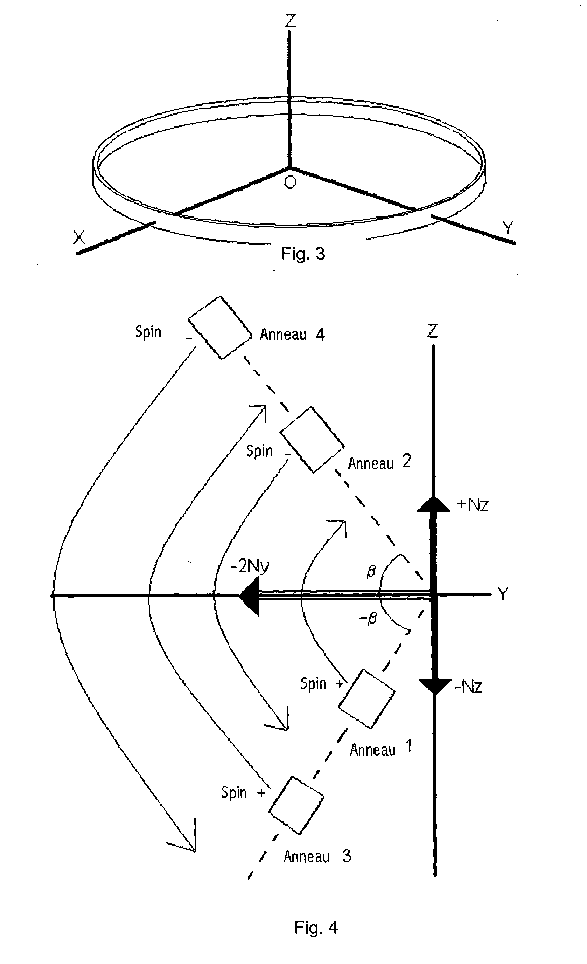

La figure 3 montre le système de référence lié à un anneau générique de ceux utilisés dans le mécanisme. Le centre O coïncide avec le centre de l'anneau, l'axe Z coïncide avec l'axe principal perpendiculaire au plan circonférentiel moyen de l'anneau et les axes X et Y sont orthogonaux à Z et entre eux formant un système dextrogyre et ils se trouvent dans le plan circonférentiel moyen.

La figure 4 présente les quatre anneaux, qui forment le mécanisme, projetés sur le plan ZY d'un système de référence inertiel dont les axes Z et X sont coïncidents avec le système de référence lié au solide exposé dans la figure 3. Les anneaux disposés concentriquement sont tournés dans ce plan : le 1 et le 3 d'un angle -β, le 2 et le 4 d'un angle +β. Les anneaux du quadrant inférieur (1 et 3) ont une vitesse de rotation en spin négative. Ceux du quadrant supérieur (2 et 4) ont une vitesse de spin positive. Les flèches indiquent les rotations en nutation qu'effectuent les anneaux dans les conditions déjà indiquées. En premier lieu, ce sont le 1 et le 2 qui tournent en passant respectivement aux positions +β et -β, grâce à quoi sont produites les composantes du couple Nx, -Ny, +Nz (l'anneau 1) et -Nx, -Ny, -Nz (l'anneau 2), qui donnent pour résultat le vecteur -2Ny, indiqué sur la figure. Il en est de même avec les anneaux 3 et 4, qui commencent à tourner au terme du mouvement des deux autres.

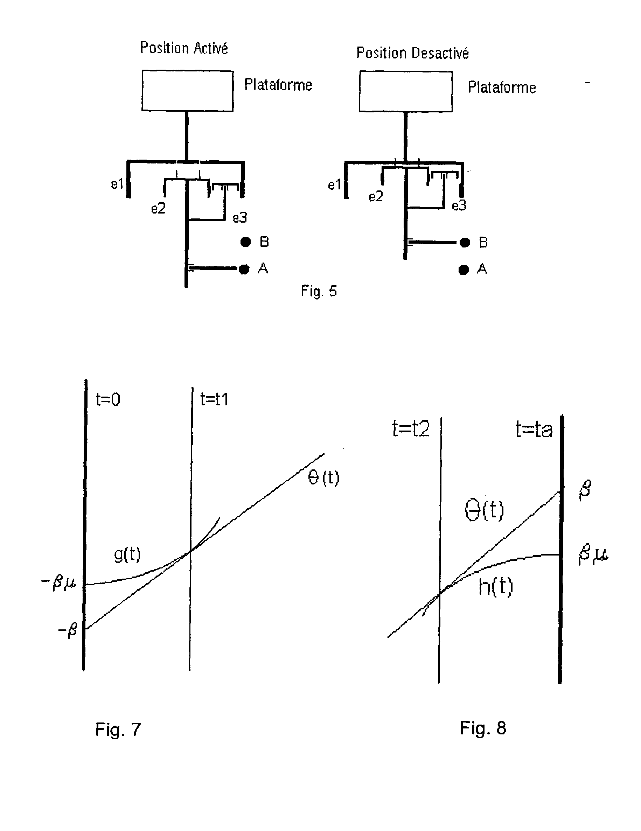

La figure 5 est un schéma d'un dispositif appelé Inverseur de Couple. Il réalise, comme son nom l'indique, l'inversion de couple se produisant à la suite du mouvement combiné des 4 anneaux, lorsqu'il faudra le faire. Comme on le décrira plus avant, le cycle de fonctionnement des anneaux produit alternativement des couples de signes opposés. Ce dispositif inverse alternativement les couples pour qu'il y ait finalement des couples du même signe. Pour cela, le dispositif peut être activé (position de gauche) ou désactivé (position de droite). Il est constitué d'un engrenage planétaire e2, dont l'axe comporte une tringle qui peut se positionner sur A (schéma gauche) ou sur B (schéma de droite). Cette tringle permettra à l'Inverseur d'être activé ou désactivé. L'engrenage planétaire e2 est en contact avec un satellite e3, qui s'engrène également (en position « activé ») avec e1, qui est un engrenage intérieur. L'engrenage e3 dispose de 2 tétons qui peuvent être introduits dans deux orifices situés dans l'engrenage intérieur e1 (position « désactivé »). On explique plus loin le fonctionnement de ce dispositif.

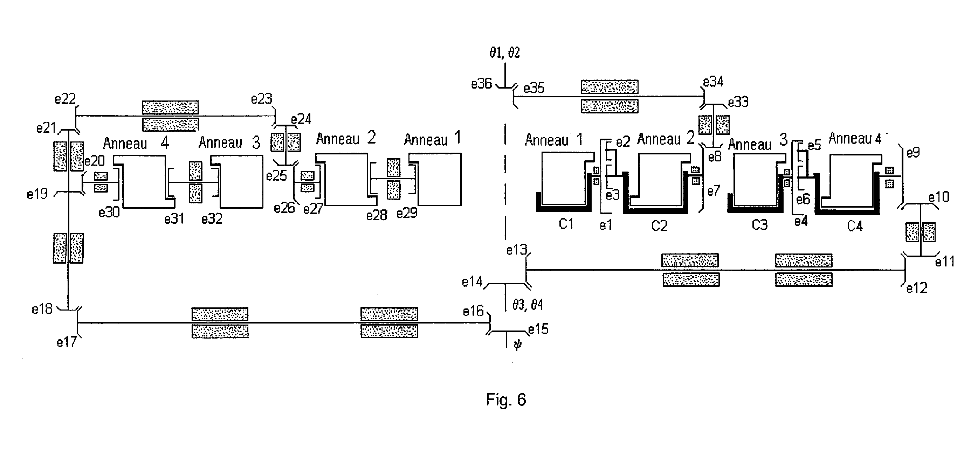

La figure 6 présente le schéma du mécanisme des quatre couronnes qui peut effectuer de façon coordonnée les rotations en spin et nutation que génère le couple objet de l'actionneur gyroscopique. Il s'agit d'une projection sur le plan XZ du système de référence inertiel. On observe les projections des 4 anneaux sur ce plan (leurs sections droites). On voit également la forme du support des anneaux au moyen de pièces (C1, C2, C3, C4) qu'on appelle berceaux. Ils consistent en des secteurs qui retiennent les anneaux en permettant leur glissement à travers eux (rotation en spin). On peut voir les chaînes cinématiques qui font arriver aux anneaux la rotations en spin (ψ) et les rotations en nutation (θ) aux couples correspondants.

La figure 7 est un graphique où, sur les ordonnées, on présente les valeurs angulaires de nutation qu'a, au moment du démarrage, l'anneau générique et, sur les abscisses, on indique les temps. Cette figure sert à expliquer la transition qui a lieu lorsqu'un anneau entame son mouvement de nutation.

La figure 8 est analogue à la précédente, mais se référant à l'arrêt du mouvement de nutation d'un anneau générique.

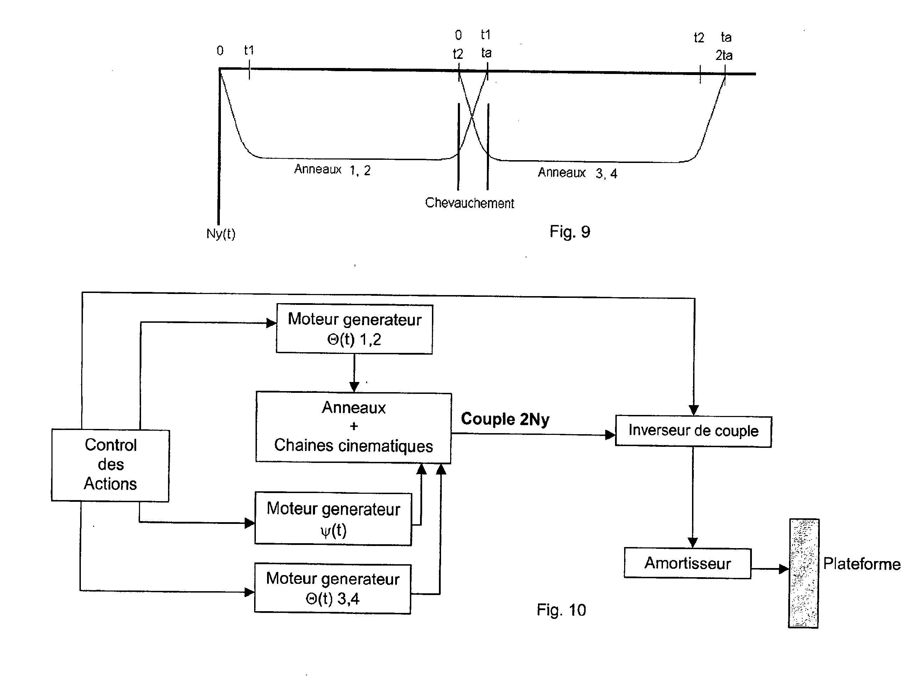

La figura 9 est un graphique où est exposée la valeur du couple généré Ny(t) lors d'un cycle du fonctionnement combiné des quatre anneaux. Le cycle se compose de deux demi-cycles. Dans le premier, les anneaux 1 et 2 (entre 0 et t1) se mettent en marche, ensuite les anneaux évoluent suivant la fonction de nutation assignée (entre t1 et t2) et, enfin, ils s'arrêtent (entre t2 et ta). Dans ce dernier intervalle, les anneaux 3 et 4 démarrent (entre 0 et t1 de leur demi-cycle), le second demi-cycle commençant alors. Ensuite, ils évoluent également selon la fonction de nutation assignée (entre t1 et 2) et, finalement, ils s'arrêtent (entre t2 et ta), ayant ainsi achevé le second demi-cycle et complété le cycle de fonctionnement. Une action du mécanisme exigera de nombreux cycles consécutifs.

La figure 10 montre un schéma en blocs de l'Actionneur Gyroscopique. Son explication est détaillée au paragraphe « Description Technique ».

## DESCRIPTION TECHNIQUE DE L'INVENTION

Toutes les applications mentionnées précédemment feront l'objet de nouveaux brevets dérivant du brevet actuel. Dans ce paragraphe, nous allons expliquer le mode de fonctionnement de l'actionneur gyroscopique, grâce à plusieurs adaptations de son environnement qui ne modifieront d'aucune façon ce qui va être décrit, que rendront possible les différentes configurations faisables pour les applications indiquées auparavant.

L'actionneur gyroscopique est basé sur la loi de conservation du moment cinétique. La définition du moment cinétique d'une particule (figure 1) de masse *m*, en mouvement à une vitesse *v* par rapport à un système de référence newtonien *Oxyz*, est la valeur *h* résultant du produit vectoriel du vecteur de la quantité de mouvement *mv* avec le vecteur *r* de position de la particule.

La loi de conservation du moment cinétique établit que la variation par rapport au temps du moment cinétique **h** d'une particule, se produisant à la suite de l'application d'une force **F** sur la particule, est égale au moment ou couple **N** qui produit cette force **F** par rapport à l'origine *O* du système de référence.

$$\frac{d\vec{h}}{dt} = \vec{N}$$

L'actionneur dispose d'un mécanisme formé d'un ensemble de paires d'anneaux par example deux paires qui, moyennant des rotations coordonnées de spin et nutation, produisent un couple **N**, réunit les conditions suivantes:

1. Le vecteur du couple **N** doit avoir une direction et un sens fixes dans le système de référence inertiel.
2. Le module du couple **N** doit être constant tant que les paramètres qui le produisent ne seront pas changés intentionnellement.
3. La durée du couple **N**, dans les conditions précédentes, sera illimitée, tant que les paramètres qui le produisent ne seront pas changés intentionnellement.

Lorsqu'un anneau tourne en spin dans le plan π, indiqué sur la figure 2 et dans ces circonstances, il subit une rotation en nutation et passe au plan d'orbite π', il y a un changement du moment cinétique **h**, qui implique l'apparition d'un couple **N**. Le mécanisme dispose de 4 anneaux qui, agissant séquentiellement par paires, permettent au couple **N** produit de réunir les trois conditions antérieures.

Les 4 anneaux ont, d'après ce qui a été dit, deux degrés de liberté: spin (ψ) et nutation (θ), la précession (φ) étant à tout instant de zéro.

Il faut que tous les anneaux, de forme cylindrique, aient les mêmes moments d'inertie sur leurs axes principaux. Sur la figure 3, on peut voir le système de référence lié à l'un des anneaux. La rotation de spin a lieu autour de l'axe Z et celui de nutation autour de l'axe X. Les anneaux seront appelés 1, 2, 3 et 4, le 1 étant le plus intérieur et le 4 le plus extérieur. Les anneaux tournent en spin à la même vitesse, mais dans des sens alternés : l'anneau 1 en +, le 2 en -, le 3 en +, le 4 en -.

Le fonctionnement combiné des anneaux a lieu par paires, autrement dit l'anneau 1 est associé à l'anneau 2 et le 3 au 4. Cela signifie que le 1 et le 2, lorsqu'ils agissent ensemble, génèrent un couple, ensuite le 3 et le 4 en agissant génèrent le même couple, de sorte qu'un cycle de fonctionnement constitué de deux demi-cycles est créé : premier demi-cycle d'action du 1 et du 2, second demi-cycle action du 3 et du 4.

Par action des paires d'anneaux, on entend la rotation en nutation (ils se déplacement continuellement en spin). Le mouvement en nutation consiste, pour l'anneau 1, dans le passage d'un plan situé, par rapport au plan horizontal XY, d'un angle θ = -β à un autre θ = +β. Simultanément, pour l'anneau 2, il s'agit du passage d'un plan situé également par rapport au plan horizontal XY, d'un angle θ = +β à un autre θ = -β.

Lorsque les anneaux se mettent à fonctionner, ils effectuent la même rotation en nutation que celle indiquée pour les anneaux 1 et 2, le cycle étant ainsi complété. Le cycle suivant commence, une nouvelle fois, avec la rotation en nutation des anneaux 1 et 2 qui, à présent, a lieu de façon inverse; l'anneau 1 passe de l'angle θ = β à θ = -β et le 2 de l'angle θ = -β à θ = β. Dans ce cycle, les anneaux 3 et 4 font également la même chose que les 1 et 2. Plus concrètement, lors du premier cycle, les anneaux entrant en action par couples, effectuent une rotation en nutation et, lors du cycle suivant, défont le rotation en nutation.

Sur la figure 4, on observe les projections des couronnes sur le plan ZY. Le sens de la vitesse de spin (+ ou -) est indiqué pour chaque couronne et, au moyen de flèches, la direction et le sens des rotations de nutation. On observe également les moments qui sont produits; dans ce cas, seules sont représentées les composantes Y et Z, car la composante X est orthogonale au plan représenté.

Lorsqu'une paire d'anneaux est en action, les composantes de X et Z des moments résultants ont des signes opposés entre eux pour chaque anneau et s'annulent. Toutefois, la composante Y a la même direction et le même sens pour les deux anneaux, ce qui fait qu'ils s'additionnent. C'est là le fondement du mécanisme et il est représenté ainsi sur la figure 4. La composante utile du moment qui génère le couple recherché va donc être Ny.

La valeur du couple Ny que fournit chaque anneau est la suivante:

$$Ny(t) := -Iz \cdot \left[ \left( \frac{d}{dt} \theta(t) \right) \frac{d}{dt} \psi(t) \cdot \cos(\theta(t)) \right]$$

où Iz est le moment principal d'inertie sur l'axe Z de l'anneau en question suivant le système de référence indiqué auparavant.

La valeur de la fonction de spin, exprimée par ψ(t) est du type linéaire, c'est pourquoi les anneaux tournent en spin à vitesse constante. Néanmoins, la fonction de nutation θ(t) doit être du type circulaire inverse, de telle sorte que la projection du couple sur l'axe Y soit constante pendant l'évolution de la rotation de nutation. La forme de ces fonctions et le fonctionnement combiné par paires d'anneaux assurent un vecteur de couple de direction constant (pas le sens, comme on le commentera plus tard), module constant et temps d'action contrôlable (tant qu'on le voudra), qui font partie des conditions signalées précédemment, que devait remplir l'actionneur gyroscopique.

La figure 6 montre le schéma du mécanisme de l'actionneur gyroscopique avec ses quatre anneaux projetés sur le plan XZ et les chaînes cinématiques, consistant en des trains d'engrenages qui font parvenir aux couronnes la rotation en spin ψ et en nutation θ. Grâce à cette figure, on peut comprendre le fonctionnement combiné du mécanisme.

En ayant présent à l'esprit que le mécanisme fonctionne essentiellement pour coordonner dans les anneaux les mouvements de spin et de nutation, on peut observer, sur cette figure, comment le spin ψ arrive à travers l'engrenage e15 à la chaîne cinématique constituée par les engrenages e16, e17, e18, e19, e20 et e30 qui est en liaison avec l'anneau 4, qui a un secteur denté dans sa partie supérieure externe, qui assure la liaison avec les dents de e30, qui communique directement le mouvement de spin (sens -). L'anneau 4 comporte, dans sa partie inférieure interne un autre secteur denté qui s'engrène avec e31, solidaire de e32. Ce dernier s'engrène avec le secteur denté de la partie supérieur externe de l'anneau 3. De cette façon, cet anneau est obligé de tourner en spin, mais dans le sens contraire de celui de l'anneau 4 (sens +). On parvient ainsi à faire tourner les deux anneaux exactement avec le même nombre de révolutions, mais en sens contraire.

L'anneau 2 reçoit le même mouvement de spin de l'engrenage e15 à travers la chaîne e16, e17, e18, e19, e21, e22, e23, e24, e25, e26 et e27. Ce dernier communique à l'anneau 2 le mouvement de spin qui, à son tour, est communiqué en sens inverse à l'anneau 1 au moyen de e28 et de e29 de la même manière que celle indiquée pour les anneaux 4 et 3.

Le mouvement de nutation est transmis indépendamment aux paires d'anneaux 1,2 et 2,3. Dans le premier cas, la nutation θ est reçue à travers l'engrenage e36 qui, au moyen de la chaîne cinématique e35, e34, e33, e8 et e7 dont l'axe est solidaire du berceau C2. Il s'agit d'une pièce qui embrasse un secteur de l'anneau 2, en lui servant de support; l'anneau se déplace en étant serré par cette pièce (berceau), qui servira à la soutenir et également à l'obliger à tourner en nutation θ, même quand il tournera en spin ψ. e7 en tournant donc en nutation de +β à -β, fera tourner le berceau C2 solidairement et, par conséquent, l'anneau 2. Il est entendu que β ne doit pas dépasser la valeur de 70°.

Lorsque le berceau C2 tourne en nutation de la façon indiqué, grâce aux engrenages e3, e2 et e1, la rotation est communiquée, dans le sens contraire, au berceau C1, pour former e3 et e2, un ensemble planétaire satellite, ce dernier s'engrenant avec celui qui constitue un engrenage intérieur. Le berceau C1 oblige l'anneau à tourner en nutation de -β à +β.

Le mouvement de nutation θ pour les anneaux 3 et 4 est reçu par l'engrenage e14. Il est transmis par l'intermédiaire de la chaîne cinématique e12, e11, e10 et e9. L'axe de ce dernier engrenage est solidaire du berceau C4 qui oblige l'anneau 4 à tourner en nutation de +β à -β. De la même manière qu'on l'a expliqué pour les anneaux 1 et 2, le mouvement de nutation est transmis maintenant à l'anneau 3 à partir du 4, par les engrenages e6, e5, e4 et le berceau C3.

Lors du cycle suivant, la transmission de la nutation changerait de signe, allant pour les anneaux 2 et 4 de -β à +β et pour les 1 et 3 de +β à -β.

Les fonctions cinématiques de spin ψ(t) et de nutation θ(t), arrivent aux engrenages respectifs, e15, e14 et e36 générées par un assemblage de puissance constitué par trois moteurs à contrôle électronique des révolutions et du couple. L'un des moteurs fournit la fonction ψ(t) à l'engrenage e15, un autre fournit la fonction θ(t) à l'engrenage e36 et le dernier fournit également la fonction θ(t) à l'engrenage e14.

Comme on l'a vu, lors du premier cycle, à la suite de l'action des anneaux 1 et 2, on obtiendrait un couple -2Ny (le signe moins est dû au fait que l'on suit la nomenclature de la figure 4), ensuite, les anneaux 3 et 4 entrant en action, on obtiendrait de nouveau le même couple -2Ny; pourtant, dans le cycle suivant, lorsque les anneaux 1 et 2 sont en action en défaisant le mouvement de nutation antérieur, le couple obtenu est de 2Ny, avec changement de signe. Il en est de même dans ce second cycle, lorsque les anneaux 3 et 4 entrent en action, qui génèrent de nouveau le couple 2Ny. C'est pourquoi il faut qu'il existe un dispositif appelé inverseur de couple, qui est représenté sur la figure 5, qui interviendra alternativement à chaque cycle pour faire que le signe du couple fourni par le mécanisme à la plateforme où il est installé soit toujours le même.

Sur la figure 5, on présente l'inverseur de couple à gauche, dans la position « activé » (réalisant l'inversion du couple) et à droite, désactivé (il ne fait pas l'inversion et fournit au châssis le même couple que celui qu'il reçoit). L'inverseur est constitué par un premier engrenage intérieur avec deux orifices assemblé de façon rigide par son axe au châssis, un ensemble constitué par deux engrenages formant le satellite et le planétaire, ce dernier à deux tétons et une tringle reliée à l'axe de l'engrenage planétaire.

Le fonctionnement de l'inverseur est le suivant: lorsque la tringle est en position A, l'inverseur de couple est activé et les dents du satellite sont en face de l'engrenage intérieur. Le couple du mécanisme est reçu par l'axe du planétaire, qui, au moyen du satellite, inverse le couple qui est reçu par l'engrenage intérieur. Ce couple inversé est transmis au châssis et, donc, à la plateforme où se trouve l'actionneur gyroscopique.

Lorsque la tringle est en position B, l'inverseur de couple est désactivé et les dents du satellite ne sont plus en face de l'engrenage intérieur. Toutefois, les tétons du planétaire sont introduits dans les orifices de l'engrenage intérieur. Dans cette situation, lorsque le couple est reçu par l'axe du planétaire, il est transmis, sans aucune inversion, à l'engrenage intérieur qui le transmet au châssis sans aucune inversion.

Grâce au dispositif inverseur de couple, on arrive à faire que le sens du vecteur soit constant pendant tous les cycles de fonctionnement du mécanisme, en remplissant ainsi les trois conditions énoncées au début du présent point.

Ce qui a été expliqué jusqu'à présent fait allusion au comportement du mécanisme en régime permanent, mais lorsque la rotation en nutation d'une couronne va commencer (démarrage), il faut passer par un intervalle de temps transitoire où la couronne évolue à partir d'une vitesse de nutation zéro à la vitesse exigée par la fonction de nutation de régime permanent (celle dérivée de la fonction en nutation $d\theta(t)/dt$).

Cette situation fait apparaître une discontinuité qu'il faut éviter en employant une fonction spécifique pour cela, g(t) qui puisse, pour la valeur de $g(0) = -\beta$ (ou $g(0) = +\beta$) où se trouve l'anneau à l'arrêt, avec une vitesse de nutation nulle, entamer le mouvement (rotation en nutation) dans un temps déterminé (temps transitoire), en permettant d'accrocher la fonction de régime permanent à la fin de l'intervalle transitoire, avec obtention de la continuité au point atteint (c'est-à-dire $g(t1) = \theta(t1)$, où t1 est la valeur du temps à la fin de la période transitoire) et dans sa dérivée première $(dg(t)/dt]_{t1} = d\theta(t)/dt]_{t1})$ ce qui équivaut à ce qu'il y ait continuité dans les valeurs angulaires et dans les vitesses de nutation à la fin de l'intervalle transitoire. La figure 7 montre le processus indiqué.

Il en est de même lorsque l'anneau arrive à la fin de sa course dans la rotation de nutation et qu'il doit s'arrêter. Il ne peut pas passer instantanément d'une vitesse de rotation donnée par l'expression $d\theta(t)/dt$ à une valeur zéro. Il lui faut passer par un intervalle transitoire qui décélère l'anneau jusqu'à ce que celui-ci s'arrête. Il s'agit là du processus de freinage. Il s'effectue au moyen d'une autre fonction cinématique h(t) qui, commençant pour un temps t2, qui marque la fin de l'intervalle de régime permanent, conduit l'anneau dans le temps t = ta à une situation dans laquelle la vitesse de rotation est zéro et sa position en nutation est $\theta(ta) = \mu\,\beta$ (ou bien $\theta(ta) = -\mu\,\beta$), où $\mu$ est un coefficient proche de 1. Cette situation est illustrée sur la figure 8.

Les fonctions transitoires de démarrage s'appliquent à la paire d'anneaux qui est en action (1 et 2, ou 3 et 4). Elles coïncideront dans le temps avec les fonctions transitoires d'arrêt de la paire d'anneaux opposée (3 et 4, ou 1 et 2), de sorte que les couples produits par chaque paire (une au démarrage et une autre à l'arrêt) ne donnent lieu, en s'additionnant, à une altération significative du couple qui est fourni par le mécanisme. Dans ces situations, on arrive à un chevauchement dans le fonctionnement combiné des anneaux, comme on peut le constater sur la figure 9. Cette zone est critique pour obtenir un bon fonctionnement du mécanisme, sans qu'il y ait de comportements brusques affectant le module du couple Ny(t). Dans tous les cas, si, du fait du dimensionnement concret du mécanisme pour une application donnée, il se produisait, dans la zone de chevauchement, des comportements non homogènes de la valeur Ny(t), on pourrait utiliser, entre le châssis du mécanisme et la plateforme sur laquelle il est installé, un amortisseur qui réduirait cette irrégularité jusqu'à des valeurs admissibles.

Le cycle qui apparaît à la figure 9, dans une situation réelle, se répètera continuellement jusqu'à ce qu'on cesse de demander le couple de l'actionneur gyroscopique.

La figure 10 est un schéma de l'architecture de l'actionneur gyroscopique, où l'on peut voir de façon schématique les parties auxquelles il a été fait allusion au cours de l'explication précédente. On y voit un dispositif non mentionné jusqu'à présent qui est le Contrôle des Actions. C'est un dispositif de contrôle électronique qui donne lieu aux actions qui doivent être produites par les moteurs, sous forme de lois cinématiques, pour générer les couples voulus et leur durée.

Les ordres des moteurs sont reçus par les chaînes cinématiques qui font se déplacer les anneaux en spin et en nutation en produisant ainsi le couple. On fait passer celui-ci par l'Inverseur de Couple, qui sera activé ou pas, selon le cycle dont il s'agira. L'activation est commandée par le Contrôle des Actions. Le couple passe ensuite à travers l'amortisseur pour en réduire les altérations dans la zone de chevauchement du cycle et, enfin, on le fait arriver jusqu'à la plateforme en provoquant son changement d'orientation.

Le couple engendré par le mécanisme dépend essentiellement de trois paramètres:

- Inertie des anneaux. Cela implique la géométrie (dimensions) et le matériel qui constitue les anneaux.
- Vitesse de rotation en spin des anneaux.
- Temps d'action de la fonction de nutation ($t_a$ sur la figure 9) dans chaque paire coordonnée d'anneaux.

Des trois paramètres énoncés, c'est le dernier (temps de nutation) qui va être essentiellement utilisé pour augmenter ou diminuer le module du vecteur couple, lorsqu'il le faudra. C'est lui qui a la réponse la plus rapide, parce qu'il dépend des actions des moteurs correspondants, qui génèrent la loi cinématique selon l'ordre reçu du Contrôle des Actions. Dans l'expression du couple Ny(t) exposée auparavant, on constate que la dépendance du temps d'action de la fonction de nutation, qui est implicite dans l'expression dθ(t)/dt, est inversement proportionnelle; plus le temps d'action de la nutation sera court, plus le couple produit sera grand.

Les deux autres paramètres sont peut intéressants pour donner des réponses rapides dans l'actionneur gyroscopique. Il est clair que la variation en spin ne va pas être aussi facilement modifiable que la nutation, et l'inertie des anneaux va être permanente, sans qu'elle ne puisse être soumise à aucune sorte de modification.

Étant donné que plus le temps d'application de la loi de nutation est court, plus le couple produit est grand, la limite dans la production du couple est dans la capacité du matériau qui constitue les anneaux; si celui-ci possède de bonnes propriétes mécaniques, telles qu'avec une rigidité très grande, il subisse des déformations insignifiantes lors de son opération en nutation, les moments d'inertie demeureront constants, le couple produit pouvant être de plus en plus grand, jusqu'à ce que les propriétés du matériau soient insuffisantes pour que les inerties des anneaux soient conservées, du fait de l'apparition de déformations significatives. Dans cette situation, on sera arrivé aux limites des possibilités du matériau pour la géométrie donnée et la vitesse de spin fixée dès le début.

Conformément à la figure 9 et dans certaines applications où un couple n'est absolument pas nécessaire et où l'on pourrait admettre une perturbation-variation de ± 20% environ par rapport à la valeur moyenne du couple, il suffirait d'utiliser l'actionneur gyroscopique avec une seule paire d'anneaux.

Dans la plupart des applications, on utilise deux paires d'anneaux et dans les cas exigeant une grande précision, on utilise trois paires d'anneaux.

## Revendications

**1.** Actionneur gyroscopique, de ceux qui servent à produire un couple ou un moment sur la plateforme sur laquelle il est situé, grâce à l'application de la loi de conservation du moment cinétique dans son mécanisme interne, **se caractérisant par le fait que**:

a) le vecteur du couple a une direction et un sens fixes dans le système de référence inertiel, une fois qu'il est produit,
b) le module du couple fourni à la plateforme a une valeur constante ou une valeur moyenne avec une perturbation cyclique inférieure à 20% de cette valeur moyenne,
c) la durée du couple dans les conditions précédentes est illimitée tant que les paramètres qui le produisent ne sont pas changés intentionnellement, auquel cas l'actionneur peut réaliser, en fonction de la demande, l'une quelconque des options suivantes:

• cesser de fournir un couple,
• augmenter ou diminuer la valeur du module,
• changer la direction et/ou le sens du vecteur couple, et **par le fait que**, pour produire le couple dans les conditions signalées, il dispose d'un mécanisme de base formé par des paires d'anneaux disposés concentriquement qui agissent, chacun d'entre eux, au moyen d'une rotation en spin et de rotations coordonnées en nutation par paires.

**2.** Actionneur gyroscopique selon la revendication antérieure, se caracérisant par le fait que les anneaux concentriques qui constituent le mécanisme de base ont tous les mêmes moments principaux d'inertie.

**3.** Actionneur gyroscopique selon les revendications antérieures, **se caractérisant par le fait que** la fonction de la rotation de spin est linéaire et fournit une vitesse de rotation constante et que la fonction de la rotation de nutation est du type *asin(pt±q),* où t est la variable indépendante temps et *p, q* deux constantes, de façon à permettre l'obtention d'un module du vecteur couple constant dans le mécanisme.

**4.** Actionneur gyroscopique selon la revendication 3, **se caractérisant par le fait qu'**il a deux chaînes cinématiques dépendantes pour que la rotation de spin arrive un anneau de chaque pair d'anneaux qui communique à l'autre un sens contraire et le même nombre de révolutions que lui-même.

**5.** Actionneur gyroscopique selon la revendication 3, **se caractérisant par le fait que** la rotation de nutation est transmise une chaîne cinématique indépendante de chaque paire d'anneaux, dont l'axe du dernier engrenage de chaque chaîne cinématique est solidaire du berceau d'un anneau de chaque paire qui tourne en nutation en communiquant ladite rotation mais dans le sens contraire au berceau de l'autre anneau de chaque paire.

6. Actionneur gyroscopique selon les revendications antérieures, **se caractérisant par le fait que** la rotation en nutation définie par la fonction de la revendication 3 envisage une fonction additionnelle pour le démarrage en nutation et une autre supplémentaire pour l'arrêt, qui agissent comme fonctions transitoires en mettant les anneaux dans les condtions exigées par le mouvement en nutation.

7. Actionneur gyroscopique selon les revendications antérieures, **se caractérisant par le fait qu'**il dispose d'un dispositif pour inverser le couple qu'il produit pour la plateforme où il est installé.

8. Actionneur gyroscopique selon les revendications antérieures, **se caractérisant par le fait qu'**il peut être utilisé sur des plateformes navales, afin d'arriver à la gouverne de celles-ci en tangage, roulis et embardée, les gouvernails ou autres systèmes de manoeuvre pouvant être remplacés, ainsi que pour obtenir la stabilisation de la plateforme elle-même.

9. Actionneur gyroscopique selon les revendications 1 à 7, **se caractérisant par le fait qu'**il peut être utilisé sur des aéronefs à aile fixe conférant la possibilité de gouverne en tangage, roulis et embardée.

10. Actionneur gyroscopique selon les revendications 1 à 7, **se caractérisant par le fait qu'**il peut être utilisé sur des hélicoptères du type actuel à hélice de compensation dans la queue, permettant d'éliminer le rotor de queue, ainsi que sa structure portante et ses mécanismes associés, conférant le contrôle et la gouverne en embardée.

11. Actionneur gyroscopique selon les revendications 1 à 7, **se caractérisant par le fait qu'**il peut être utilisé sur des véhicules automobiles terrestres pour corriger l'instabilité dynamique des châssis au moment d'effectuer des manoeuvres avec changements de direction, grâce à la production du couple approprié pour qu'il compense l'instabilité.

12. Actionneur gyroscopique selon les revendications 1 à 7, **se caractérisant par le fait qu'**il peut être utilisé sur des trains, aussi bien sur des voitures motrices que sur des wagons, pour obtenir 1a stabilité dynamique de ce type de véhicules.

13. Actionneur gyroscopique selon les revendications 1 à 7, **se caractérisant par le fait qu'**il peut être utilisé sur des plateformes aérospatiales, pour en changer l'attitude avec des couples qui peuvent atteindre des valeurs de l'ordre de $10^3$ N•m.

**Claims**

1. A gyroscopic actuator, such as are used to generate a torque or a moment on the platform on which it is located, thanks to the application of the law of conservation of angular momentum in its internal mechanism, **characterized by** the fact that :

   a) The vector of the torque has an axis and direction that are fixed in the inertial reference frame, once generated,
   b) The magnitude of the torque provided to the platform has a constant value or a mean value with a cyclic perturbation less than 20% of the mean value,
   c) The duration of the torque under the preceding conditions is unlimited so long as the parameters that produce it are not intentionally altered, in which case the actuator may execute, depending on demand, any one of the following options :

   • stop providing a torque,
   • increase or decrease the value of the magnitude
   • change the axis and/or the direction of the torque vector, and by virtue of the fact that, to produce the torque under the given conditions, it is provided with a basic mechanism made up of pairs of concentrically arranged rings each of which operates by means of a spin rotation and in coordinated pairs of nutation rotations.

2. A gyroscopic actuator according to the preceding claim, **characterized by** the fact that the concentric rings which constitute the basic mechanism all have the same principal moments of inertia.

3. A gyroscopic actuator according to the preceding claims, **characterized by** the fact that the spin rotation function is linear and provides a constant rotation speed and that the nutation rotation function is of the *asin(pt + q)* type, where *t* is the independent time variable and *p*, *q* are constants, so as to allow a torque vector of constant magnitude to be obtained in the mechanism.

4. A gyroscopic actuator according to claim 3, **characterized by** the fact that it has two dependent kinematic chains so that the spin rotation arrives at one ring of each ring pair which transmits to the other an equal number of revolutions in the direction opposite to its own.

5. A gyroscopic actuator according to claim 3, **characterized by** the fact that the nutation rotation is transmitted by a kinematic chain independent of each ring pair, where the shaft of the last gear of each kinematic chain is integral with the cradle of a ring in each pair which turns in nutation while transmitting the said rotation, but in the opposite direction, to the cradle of the other ring of each pair.

**6.** A gyroscopic actuator according to the preceding claims, **characterized by** the fact that the nutation rotation defined by the function of claim 3 includes an additional function for starting nutation and another supplementary function for stopping, which act as transient functions by putting the rings into the states required by the nutational motion.

**7.** A gyroscopic actuator according to the preceding claims, **characterized by** the fact that it is provided with an arrangement for inverting the torque which it generates for the platform on which it is installed.

**8.** A gyroscopic actuator according to the preceding claims, **characterized by** the fact that it can be used on naval platforms, in order to achieve their control in pitch, roll and sway, allowing rudders or other manoeuvring systems to be replaced, as well as to achieve stabilization of the platform itself.

**9.** A gyroscopic actuator according to claims 1 to 7, **characterized by** the fact that it can be used on fixed-wing aircraft, giving the possibility of control in pitch, roll and sway.

**10.** A gyroscopic actuator according to claims 1 to 7, **characterized by** the fact that it can be used on helicopters of the current type with tail-mounted compensating rotors, allowing the elimination of the tail rotor as well as its supporting structure and associated mechanisms, providing guidance and control in sway.

**11.** A gyroscopic actuator according to claims 1 to 7, **characterized by** the fact that it can be used on land automobile vehicles to correct the dynamic instability of the chassis when performing manoeuvres involving changes of direction, thanks to the generation of the appropriate torque for compensating the instability.

**12.** A gyroscopic actuator according to claims 1 to 7, **characterized by** the fact that it can be used on trains, both on propulsive railcars and on cars, to achieve .dynamic stability in this type of vehicle.

**13.** A gyroscopic actuator according to claims 1 to 7, **characterized by** the fact that it can be used on aerospace platforms, to change their attitude with torques that can reach values on the order of $10^3$ N•m.

**Patentansprüche**

**1.** Gyroskopisches Stellglied von der Art, die dazu dienen, ein Kräftepaar oder ein Moment auf der Plattform, auf der es liegt, mit Hilfe einer Anwendung des Erhaltungssatzes für das Impulsmoment in seinem inneren Mechanismus zu erzeugen, **gekennzeichnet durch** die Tatsache, dass:

    a) der Vektor des Kräftepaars eine feste Direktion und eine feste Richtung in dem inertialen Bezugssystem aufweist, sobald er aufgetreten ist,
    b) das Modul des Kräftepaars, das der Plattform bereitgestellt wird, einen konstanten Wert oder einen Mittelwert mit einer zyklischen Störung von weniger als 20 % dieses Mittelwerts aufweist,
    c) die Dauer des Kräftepaars unter den vorgenannten Bedingungen unbegrenzt ist, solange die Parameter, die es erzeugen, nicht absichtlich verändert werden, in welchem Fall das Stellglied, abhängig von der Anforderung, irgendeine der folgenden Optionen ausführen kann:

      - Aufhören, ein Kräftepaar bereitzustellen,
      - Erhöhen oder Erniedrigen des Werts des Moduls,
      - Ändern der Direktion und/oder der Richtung des Vektors des Kräftepaars, und aufgrund der Tatsache, dass es, um das Kräftepaar unter den angegebenen Bedingungen zu erzeugen, über einen Basismechanismus verfügt, der aus Ringpaaren besteht, die konzentrisch angeordnet sind, wobei jeder von ihnen mittels einer Spin-Rotation und paarweisen koordinierten Rotationen in Nutation wirkt.

**2.** Gyroskopisches Stellglied nach dem vorhergehenden Anspruch, **gekennzeichnet durch** die Tatsache, dass die konzentrischen Ringe, die den Basismechanismus bilden, alle die gleichen Hauptträgheitsmomente aufweisen.

**3.** Gyroskopisches Stellglied nach den vorhergehenden Ansprüchen, **gekennzeichnet durch** die Tatsache, dass die Funktion der Spin-Rotation linear ist, und eine konstante Rotationsgeschwindigkeit bereitstellt und dass die Funktion der Nutationsrotation vom Typ $asin(pt \pm q)$ ist, worin $t$ die unabhängige variable Zeit ist und $p$, $q$ zwei Konstanten sind, um in dem Mechanismus den Erhalt eines konstanten Moduls des Vektors des Kräftepaars zu ermöglichen.

**4.** Gyroskopisches Stellglied nach Anspruch 3, **gekennzeichnet durch** die Tatsache, dass es zwei abhängige kinematische Ketten aufweist, damit die Spin-Rotation einen Ring jedes Ringpaars erreicht, der dem anderen eine entgegengesetzte Richtung und die gleiche Anzahl von Umdrehungen wie sich selbst vermittelt.

5. Gyroskopisches Stellglied nach Anspruch 3, **gekennzeichnet durch** die Tatsache, dass die Nutationsrotation **durch** eine unabhängige kinematische Kette von jedem Ringpaar übertragen wird, wobei die Achse der letzten Verzahnung jeder kinematischen Kette kraftschlüssig mit der Aufhängung eines Rings jedes Paars verbunden ist, das sich in Nutation dreht, wobei es der Aufhängung des anderen Rings jedes Paars die Rotation, aber in entgegengesetzter Richtung, vermittelt.

6. Gyroskopisches Stellglied nach den vorhergehenden Ansprüchen, **gekennzeichnet durch** die Tatsache, dass die Rotation in Nutation, definiert **durch** die Funktion aus Anspruch 3, eine zusätzliche Funktion zum Starten in Nutation und eine andere ergänzende zum Anhalten vorsieht, die als vorübergehende Funktionen wirken, wobei sie die Ringe in die Bedingungen bringen, die von der Nutationsbewegung gefordert werden.

7. Gyroskopisches Stellglied nach den vorhergehenden Ansprüchen, **gekennzeichnet durch** die Tatsache, dass es über eine Vorrichtung zur Umkehrung des Kräftepaars verfügt, das es für die Plattform erzeugt, auf der es angebracht ist.

8. Gyroskopisches Stellglied nach den vorhergehenden Ansprüchen, **gekennzeichnet durch** die Tatsache, dass es auf Seeplattformen verwendet werden kann, um die Steuerung derselben beim Nicken, Rollen und Gieren zu erreichen, wobei die Ruder oder andere Manövriersysteme ersetzt werden können, sowie um die Stabilisierung der Plattform selbst zu erhalten.

9. Gyroskopisches Stellglied nach den Ansprüchen 1 bis 7, **gekennzeichnet durch** die Tatsache, dass es auf Starrflügelflugzeugen verwendet werden kann, wobei es die Möglichkeit zur Steuerung beim Nicken, Rollen und Gieren verleiht.

10. Gyroskopisches Stellglied nach den Ansprüchen 1 bis 7, **gekennzeichnet durch** die Tatsache, dass es auf Hubschraubern aktuellen Typs mit kompensierendem Propeller im Heck verwendet werden kann, wobei es ermöglicht, den Heckrotor, sowie dessen Trägerstruktur und dessen assoziierte Mechanismen zu eliminieren, wobei es Kontrolle und Steuerung beim Gieren verleiht.

11. Gyroskopisches Stellglied nach den Ansprüchen 1 bis 7, **gekennzeichnet durch** die Tatsache, dass es auf Landmotorfahrzeugen verwendet werden kann, um die dynamische Instabilität des Fahrgestells beim Durchführen von Manövern mit Richtungsänderungen mit Hilfe der Erzeugung des geeigneten Kräftepaars zu korrigieren, damit es die Instabilität kompensiert.

12. Gyroskopisches Stellglied nach den Ansprüchen 1 bis 7, **gekennzeichnet durch** die Tatsache, dass es in Zügen, sowohl in Triebwagen als auch in Waggons verwendet werden kann, um die dynamische Stabilität dieses Typs von Fahrzeugen zu erhalten.

13. Gyroskopisches Stellglied nach den Ansprüchen 1 bis 7, **gekennzeichnet durch** die Tatsache, dass es auf Luft- und Raumfahrtplattformen verwendet werden kann, um deren Lage mit Drehmomenten zu verändern, die Werte in der Größenordnung von $10^3$ N.m erreichen können.

Fig. 1

Fig. 2

Fig. 3

Fig. 4

Position Activé

Plataforme

e1

e2

e3

● B

● A

Position Desactivé

Plataforme

e1

e2

e3

● B

● A

Fig. 5

t=0    t=t1

$\Theta(t)$

g(t)

$-\beta\mu$

$-\beta$

Fig. 7

t=t2    t=ta

$\Theta(t)$    $\beta$

$\beta\mu$

h(t)

Fig. 8

Fig. 6

Fig. 9

Fig. 10

EP 1 452 830 B1

**EP 1 452 830 B1**

## RÉFÉRENCES CITÉES DANS LA DESCRIPTION

**Documents brevets cités dans la description**

- US 006135392 A
- US 005826829 A
- US 005931421 A
- US 005112012 A
- US 004863404 A
- US 004817550 A
- US 005876148 A
- US 004930807 A
- US 004550926 A
- US 004345661 A
- GB 2039834 A
- DE 4116837
- JP 57182505 B
- FR 2563487
- FR 2563487 A1
- US 5573265 A

**Littérature non-brevet citée dans la description**

- **Bill Gunston ; Mike Spick.** Modern Fighting Helicopters. 1998